# EUROPEAN PATENT APPLICATION

(11) **EP 4 708 537 A1**
(43) Date of publication of application: **11.03.2026**
(21) Application number: 24836855.7
(22) Date of filing: 30.09.2024
(51) Int. Cl.: H01M 50/403, H01M 50/446, H01M 50/451

(54) **HYBRID-COATED SEPARATOR, AND PREPARATION METHOD THEREFOR AND USE THEREOF**

(30) Priority: 11.07.2024 CN 202410931649
(71) Applicant: Eve Power Co., Ltd., Jingmen, Hubei 448000 (CN)
(72) Inventor: LIU, Fanfen, Jingmen, Hubei 448000 (CN); ZHANG, Heng, Jingmen, Hubei 448000 (CN); LI, Chi, Jingmen, Hubei 448000 (CN); ZHANG, Huan, Jingmen, Hubei 448000 (CN); ZHANG, Yong, Jingmen, Hubei 448000 (CN)
(74) Representative: Herrero & Asociados, S.L.
(86) International application number: PCT/CN2024/122897
(87) International publication number: WO 2026/011580

(57) **Abstract**

A method for preparing a composite coating separator is disclosed. The method includes: mixing raw materials including an inorganic powder, a hollow latex microsphere emulsion, a binder, and a solvent to obtain a mixed slurry; applying the mixed slurry to a surface of a base film, and drying the mixed slurry on the surface of the base film to obtain the composite coating separator. A mass ratio of the inorganic powder in the mixed slurry is 20%-35%, and a mass ratio of the hollow latex microsphere emulsion in the mixed slurry is 5%-10%. A viscosity of the mixed slurry is 100 mPa.s-120 mPa.s. The hollow latex microsphere emulsion includes hollow microspheres, and a density of the hollow microspheres is 0.8 g/cm³-0.9 g/cm³.

## Description

This application claims the priority of Chinese Patent Application No. 202410931649.9, filed on July 11, 2024 in the National Intellectual Property Administration of China, the contents of which are herein incorporated by reference in their entireties.

### TECHNICAL FIELD

The present disclosure relates to the field of lithium battery technology, particularly to a composite coating separator, a method for preparing the composite coating separator, and an application of the composite coating separator.

### BACKGROUND

As one of key internal components of lithium batteries, a separator primarily acts to separate a cathode and an anode, preventing short circuits by keeping the cathode and anode from coming into contact.

Although currently used alumina-coated separators have good mechanical strength and high-temperature resistance, they exhibit poor bonding performance to cathode and anode sheets, resulting in loose fitting between the electrode sheets and the separator, leading to soft battery cells. To improve this situation, newly developed separator materials are prepared by adding an adhesive coating to an alumina layer, not only enhancing bonding performance between the separator and the electrode sheets but also increasing hardness of a wounding core, thereby improving performance of lithium batteries.

### SUMMARY

### Technical Problem

A high coverage rate of polyvinylidene fluoride (PVDF) and severe pore blockage of the adhesive coating lead to reduce the number of lithium-ion transmission channels and affect performance of the lithium batteries.

### Technical Solution

In a first aspect, the present disclosure provides a method for preparing a composite coating separator. The method includes: mixing raw materials including an inorganic powder, a hollow latex microsphere emulsion, a binder, and a solvent to obtain a mixed slurry; applying the mixed slurry to a surface of a base film and drying the mixed slurry on the base film to obtain the composite coating separator. In the mixed slurry, a mass ratio of the inorganic powder is 20%-35%, and a mass ratio of the hollow latex microsphere emulsion is 5%-10%. A viscosity of the mixed slurry is 100 mPa.s-120 mPa.s. The hollow latex microsphere emulsion includes hollow microspheres, and a density of the hollow microspheres is 0.8 g/cm³-0.9 g/cm³.

In a second aspect, the present disclosure provides a composite coating separator prepared by the above method.

In a third aspect, the present disclosure provides a lithium-ion battery including the composite coating separator described above.

### Beneficial Effects

Firstly, by using the inorganic powder and the hollow latex microsphere emulsion to prepare the mixed slurry and adjusting the mass ratio of the inorganic powder and the mass ratio of the hollow latex microsphere emulsion in the mixed slurry, not only can a mixed slurry with an appropriate viscosity be obtained, and spreading performance of the mixed slurry on the base film can be adjusted, so that the mixed slurry can form a complete coating layer on the surface of the base film by a single time coating, avoiding multiple coatings, thereby improving production efficiency of the composite coating separator. Moreover, dispersion uniformity of the hollow microspheres in the hollow latex microsphere emulsion can be improved, which is helpful for improving bonding uniformity between the base film and electrode sheets across different areas, and is helpful for improving mechanical strength of various areas of the wound core, preventing wrinkles caused in the wound core due to weaker strength in some areas.

Secondly, by controlling the viscosity of the mixed slurry and the density of the hollow microspheres, during a formation process of the mixed slurry, the hollow microspheres can gradually move to a surface of the coating layer formed by the mixed slurry as water evaporates. At this stage, parts of the hollow microspheres protruding from the coating layer can better bond with the electrode sheets under hot-press conditions. Specifically, under the hot-press conditions, the hollow microspheres melt, creating physical bonds between the coating layer and the electrode sheets (through intermolecular forces on the material's surface, which build up force to achieve the bonding effect), which is helpful for improving thermal peeling strength and mechanical strength of the separator, thereby addressing the issue of electrode sheets wrinkling in traditional wound cores due to weak strength.

Thirdly, by maintaining the density of the hollow microspheres within the above-mentioned range, a sufficient number of hollow microspheres can rise to the surface of the coating layer formed by the mixed slurry, and during a hot-press process, the hollow microspheres can maintain enough strength to avoid collapsing.

Fourthly, the parts of the hollow microspheres protruding from the coating layer can act as supports between the electrode sheets and the base film, increasing gaps between the electrode sheets and the base film. It can not only provide a buffer space to release an expansion force of the anode sheet during a charge-discharge process, but also improve liquid absorption performance of the separator, thereby improving wetting performance of electrolyte on the electrode sheets, which is helpful for improving overall performance of the lithium battery.

### DETAILED DESCRIPTION

In some embodiments, a hollow latex microsphere emulsion is prepared by a method including: S1, mixing water and an emulsifier to obtain an emulsified liquid, taking and stirring a first part of the emulsified liquid, and adding a mixture of a monomer and an initiator dropwise to the first part of the emulsified liquid during stirring the first part of the emulsified liquid to obtain a pre-treated solution; S2, adding a second part of the emulsified liquid to the pre-treated solution to obtain a mixed liquid, stirring the mixed liquid, and performing a heat preservation and a cooling operation on the mixed liquid to obtain the hollow latex microsphere emulsion.

In some embodiments, a mass ratio of water to the emulsifier is (2-4):98. A mass ratio of the first part of the emulsified liquid to the second part of the emulsified liquid is 1:(1-2). A mass ratio of the monomer to the initiator is 100:(0.5-1).

In some embodiments, in S1, a temperature during stirring the first part of the emulsified liquid is 25±2°C, and the mixture of the monomer and the initiator are added at a uniform speed for 1.5 h-2 h. In S2, the mixed liquid is stirred for 1 h-2 h, and after being stirred, the mixed liquid is heated to 55°C-60°C and maintained at 55°C-60°C for 6 h-8 h.

By controlling the mass ratios of raw materials and preparing the hollow latex microsphere emulsion through the above operations, hollow microspheres with a suitable density can be obtained. When the mixed slurry is applied to the surface of the base film, a sufficient number of hollow microspheres can rise to the surface of the coating layer, which can not only increase a contact area between the hollow microspheres and the electrode sheets, so that under the hot-press conditions, a relatively high bonding strength can be generated between the hollow microspheres and the electrode sheets, improving mechanical strength of a battery cell, and preventing electrode sheets wrinkling. Moreover, a stable support structure between the electrode sheets and the separator can be formed, creating pores to accommodate more electrolyte, thus improving wetting performance of the electrolyte on the electrode sheets and the separator, and enhancing the overall performance of the lithium battery.

In some embodiments, the monomer includes at least one selected from the group consisting of a copolymer of unsaturated nitrile monomer unit, a copolymer of vinyl monomer unit, a copolymer of allylamine monomer unit, a copolymer of acrylate monomer unit, a copolymer of methacrylate monomer unit, a copolymer of vinyl chloride monomer unit, a modified compound of the copolymer of unsaturated nitrile monomer unit, a modified compound of the copolymer of vinyl monomer unit, a modified compound of the copolymer of allylamine monomer unit, a modified compound of the copolymer of acrylate monomer unit, a modified compound of the copolymer of methacrylate monomer unit, and a modified compound of the copolymer of vinyl chloride monomer unit.

In some embodiments, the unsaturated nitrile monomer unit includes at least one of acrylonitrile and methacrylonitrile.

The vinyl monomer unit includes at least one of styrene monomer and α-methyl styrene monomer.

The allylamine monomer unit includes at least one selected from the group consisting of acrylamide, methacrylamide, phenylmaleimide, a derivative of acrylamide, a derivative of methacrylamide, and a derivative of phenylmaleimide.

The acrylate monomer unit includes at least one selected from the group consisting of methyl acrylate, ethyl acrylate, propyl acrylate, isopropyl acrylate, n-butyl acrylate, t-butyl acrylate, n-pentyl acrylate, n-hexyl acrylate, heptyl acrylate, isooctyl acrylate, 2-ethylhexyl acrylate, nonyl acrylate, decyl acrylate, lauryl acrylate, an alkali metal salt of methyl acrylate, an alkali metal salt of ethyl acrylate, an alkali metal salt of propyl acrylate, an alkali metal salt of isopropyl acrylate, an alkali metal salt of n-butyl acrylate, an alkali metal salt of t-butyl acrylate, an alkali metal salt of n-pentyl acrylate, an alkali metal salt of n-hexyl acrylate, an alkali metal salt of heptyl acrylate, an alkali metal salt of isooctyl acrylate, an alkali metal salt of 2-ethylhexyl acrylate, an alkali metal salt of nonyl acrylate, an alkali metal salt of decyl acrylate, and an alkali metal salt of lauryl acrylate.

The methacrylate monomer unit includes at least one selected from the group consisting of methyl methacrylate, ethyl methacrylate, propyl methacrylate, n-hexyl methacrylate, heptyl methacrylate, isooctyl methacrylate, 2-ethylhexyl methacrylate, nonyl methacrylate, an alkali metal salt of methyl methacrylate, an alkali metal salt of ethyl methacrylate, an alkali metal salt of propyl methacrylate, an alkali metal salt of n-hexyl methacrylate, an alkali metal salt of heptyl methacrylate, an alkali metal salt of isooctyl methacrylate, an alkali metal salt of 2-ethylhexyl methacrylate, and an alkali metal salt of nonyl methacrylate.

The vinyl chloride monomer unit includes vinylidene chloride.

By using the above monomers to prepare the hollow latex microsphere emulsion, hollow microspheres with high mechanical strength in the prepared hollow latex microsphere emulsion can be obtained, which can prevent the hollow microspheres from breaking when the hollow microspheres are bonded to the electrode sheet under the hot-press conditions, thereby maintaining the support function of the hollow microspheres to the electrode sheets, ensuring stability of pore structures between the electrode sheets and the base film, enhancing the wetting of the electrolyte on the separator and electrode sheets, and providing a buffer space for the expansion of the anode sheet, thus improving the overall performance of the lithium battery.

In some embodiments, by weight percentage, raw materials of the composite coating separator further include 0.2%-0.4% of a dispersant, 5%-10% of a thickener, and 5%-10% of a binder, with the solvent making up the balance.

In some embodiments, the dispersant includes at least one selected from the group consisting of polyethylene glycol, sodium polyacrylate, potassium polyacrylate, ammonium polyacrylate, and polyacrylate.

In some embodiments, the thickener includes at least one selected from the group consisting of sodium hydroxymethyl cellulose, polymethyl methacrylate emulsion, and polyacrylate emulsion.

In some embodiments, the binder includes at least one selected from the group consisting of polyacrylic acid, polyvinyl alcohol, and polyacrylamide.

In some embodiments, the method for preparing the composite coating separator specifically includes: step I, mixing the inorganic powder with the solvent to obtain a first mixture, and stirring the first mixture; adding the dispersant to the first mixture to obtain a second mixture, and stirring the second mixture; adding the hollow latex microsphere emulsion to the second mixture to obtain a third mixture, and stirring the third mixture; adding the thickener to the third mixture to obtain a fourth mixture, and stirring the fourth mixture; adding the binder to the fourth mixture to obtain a fifth mixture, and stirring the fifth mixture to obtain the mixed slurry; and step II, applying the mixed slurry to the surface of the base film by micro-gravure coating, and drying the mixed slurry on the base film to obtain the composite coating separator.

By using the inorganic powder and the hollow latex microsphere emulsion together, firstly, it is helpful for obtaining the mixed slurry with an appropriate viscosity, improving the spreading performance of the mixed slurry on the surface of the base film, and dispersion uniformity of the hollow microspheres in the mixed slurry, and improving bonding uniformity between the hollow microspheres and the electrode sheets. Moreover, it is helpful for enhancing the mechanical strength of the coating layer formed by the mixed slurry.

In some embodiments, when the first mixture is stirred, a first stirring speed is 500 rpm-600 rpm, and a first stirring duration is 40 min-60 min. When the second mixture is stirred, a second stirring speed is 500 rpm-600 rpm, and a second stirring duration is 40 min-60 min. When the third mixture is stirred, a third stirring speed is 200 rpm-300 rpm, and a third stirring duration is 30 min-60 min. When the fourth mixture is stirred, a fourth stirring speed is 200 rpm-300 rpm, and a fourth stirring duration is 30 min-60 min. When the fifth mixture is stirred, a fifth stirring speed is 200 rpm-300 rpm, and a fifth stirring duration is 30 min-60 min.

In some embodiments, the composite coating separator includes a base film and a coating layer arranged on at least one surface of the base film. The coating layer includes a base layer and hollow microspheres embedded in the base layer. A thickness of the base layer is ≥3 µm.

In some embodiments, the base film includes at least one selected from the group consisting of a polyethylene separator, a polypropylene separator, and a polypropylene-polyethylene composite separator.

In some embodiments, a particle size D50 of the hollow microspheres is 1 µm-2 µm.

By controlling the particle size D50 of the hollow microspheres and the thickness of the base layer, a ratio of a volume of the hollow microspheres protruding from the surface of the base layer to a volume of the hollow microspheres embedded in the base layer can be adjusted and maintained within a reasonable range. Firstly, a part of the hollow microspheres protruding from the surface of the base layer is enabled to form good bonds with the electrode sheet. Additionally, a part of the hollow microspheres embedded in the base layer can form a stable fitting relationship with the base layer, balancing uniformity of forces applied between a bonding part of the hollow microspheres with the electrode sheet and a embedding part of the hollow microspheres with the base layer, thereby enhancing volumetric stability of the hollow microspheres and improving the overall performance of the lithium battery.

In some embodiments, the base layer further includes the inorganic powder, and a particle size D50 of the inorganic powder is ≤1 µm.

In some embodiments, the inorganic powder includes at least one selected from the group consisting of alumina powder, magnesium oxide, and boehmite.

### Example 1

### 1. Preparation of Hollow Latex Microsphere Emulsion

S1. Water and an emulsifier (propylene glycol) were mixed at a mass ratio of 2:98 to obtain an emulsified liquid, a first part of the emulsified liquid was taken and stirred at 25°C, and a mixture of a monomer (styrene) and an initiator (azobisisobutyronitrile) was added dropwise at a constant rate when the first part of the emulsified liquid was stirred. A mass ratio of the monomer to the initiator was 100:1. The dropwise addition process lasted for 2 h, and a pre-treated solution was obtained after the dropwise addition was completed.

S2. A second part of the emulsified liquid was added to the pre-treated solution to produce a mixed liquid. A mass ratio of the first part of the emulsified liquid to the second part of the emulsified liquid was 1:1. The mixed liquid was stirred for 2 h, then heated to 55°C-60°C and maintained at 55°C-60°C for 5-6 h, and then cooled to 25°C to obtain the hollow latex microsphere emulsion. A particle size D50 of the hollow microspheres was 1.5 µm.

### 2. Preparation of Composite Coating Separator

Step I, an alumina powder with a particle size D50 of 1 µm was mixed with water to produce a first mixture, and the first mixture was stirred at 500 rpm for 60 min. A dispersant (polyethylene glycol) was added to the first mixture to produce a second mixture, and the second mixture was stirred at 500 rpm for 60 min. The hollow latex microsphere emulsion was added to the second mixture to produce a third mixture, and the third mixture was stirred at 300 rpm for 60 min. A thickener (sodium hydroxymethyl cellulose) was added to the third mixture to produce a fourth mixture, and the fourth mixture was stirred at 300 rpm for 60 min. A binder (polyacrylic acid) was added to the fourth mixture to produce a fifth mixture, and the fifth mixture was stirred at 300 rpm for 60 min. Subsequently, iron was filtered out from the fifth mixture to obtain a mixed slurry.

By percentage, raw materials of the mixed slurry included 30% of the alumina powder, 5% of the hollow latex microsphere emulsion, 0.3% of the dispersant, 5% of the thickener, 5% of the binder, and 54.7% of water.

Step II, the mixed slurry was applied to both surfaces of a base film (PE separator) by micro-gravure coating, and then dried to obtain a composite coating separator. A thickness of the base layer in the composite coating separator was 3 µm.

### 3. Preparation of Cathode Sheet

A cathode active material (lithium iron phosphate), a conductive agent SP, and a binder PVDF were mixed at a mass ratio of 94:3:3, and then dispersed in N-methyl-2-pyrrolidone to obtain a cathode slurry. The cathode slurry was coated onto an aluminum foil and then dried at 85°C in a vacuum for 24 h to obtain a cathode sheet.

### 4. Preparation of Anode Sheet

An anode active material (artificial graphite), a conductive agent SP, and a binder CMC were mixed at a mass ratio of 92:4:4, and then dispersed in deionized water to obtain an anode slurry. The anode slurry was coated onto a copper foil and dried at 100°C in a vacuum for 12 h to obtain an anode sheet.

### 5. Preparation of Electrolyte

Ethylene carbonate (EC), ethyl methyl carbonate (EMC), and diethyl carbonate (DEC) were mixed at a volume ratio of 1:1:1 to obtain an organic solvent. A thoroughly dried lithium salt LiPF6 was dissolved in the organic solvent to produce an electrolyte with a concentration of 1 mol/L.

### 6. Preparation of Lithium Battery

The cathode sheet, separator, and anode sheet were stacked in sequence, with the separator positioned between the cathode sheet and the anode sheet to separate the cathode sheet and the anode sheet, and then rolled to form a bare battery cell. The bare battery cell was placed in an external casing and dried. The electrolyte was injected in the casing to obtain an assembly. Then a vacuum sealing, resting, forming (at 45°C, 0.6 MPa, under which the hollow microspheres melted and a physical bonding between the electrodes and the coating layer was generated), and capacity setting were performed on the assembly to produce a lithium battery.

### Example 2

Differences between the present example and Example 1 were the preparation of the hollow latex microsphere emulsion and the preparation of the composite coating separator.

### 1. Preparation of Hollow Latex Microsphere Emulsion

S1. Water and an emulsifier (propylene glycol) were mixed at a mass ratio of 4:98 to obtain an emulsified liquid, a first part of the emulsified liquid was taken and stirred at 25°C, and a mixture of a monomer (styrene) and an initiator (azobisisobutyronitrile) was added dropwise at a constant rate when the first part of the emulsified liquid was stirred. A mass ratio of the monomer to the initiator was 100:1. The dropwise addition process lasted for 1.5 h, and a pre-treated solution was obtained after the dropwise addition was completed.

S2. A second part of the emulsified liquid was added to the pre-treated solution to produce a mixed liquid. A mass ratio of the first part of the emulsified liquid to the second part of the emulsified liquid was 1:1. The mixed liquid was stirred for 1 h, then heated to 60°C and maintained at 60°C for 6 h, and then cooled to 25°C to obtain the hollow latex microsphere emulsion. A particle size D50 of the hollow microspheres was 1 µm.

### 2. Preparation of Composite Coating Separator

Step I, an alumina powder with a particle size D50 of 0.5 µm was mixed with water to produce a first mixture, and the first mixture was stirred at 600 rpm for 40 min. A dispersant (polyethylene glycol) was added to the first mixture to produce a second mixture, and the second mixture was stirred at 600 rpm for 60 min. The hollow latex microsphere emulsion was added to the second mixture to produce a third mixture, and the third mixture was stirred at 300 rpm for 60 min. A thickener (sodium hydroxymethyl cellulose) was added to the third mixture to produce a fourth mixture, and the fourth mixture was stirred at 200 rpm for 60 min. A binder (polyacrylic acid) was added to the fourth mixture to produce a fifth mixture, and the fifth mixture was stirred at 300 rpm for 30 min. Subsequently, iron was filtered out from the fifth mixture to obtain a mixed slurry.

By percentage, raw materials of the mixed slurry included 20% of the alumina powder, 6% of the hollow latex microsphere emulsion, 0.2% of the dispersant, 5% of the thickener, 5% of the binder, and 63.8% of water.

Step II, the mixed slurry was applied to both surfaces of a base film (PE separator) by micro-gravure coating, and then dried to obtain a composite coating separator. A thickness of the base layer in the composite coating separator was 3 µm.

All other operations and parameters remained consistent with Example 1.

### Example 3

Differences between the present example and Example 1 were the preparation of the hollow latex microsphere emulsion and the preparation of the composite coating separator.

### 1. Preparation of Hollow Latex Microsphere Emulsion

S1. Water and an emulsifier (propylene glycol) were mixed at a mass ratio of 3:98 to obtain an emulsified liquid, a first part of the emulsified liquid was taken and stirred at 25°C, and a mixture of a monomer (styrene) and an initiator (azobisisobutyronitrile) was added dropwise at a constant rate when the first part of the emulsified liquid was stirred. A mass ratio of the monomer to the initiator was 100:0.5. The dropwise addition process lasted for 1.5 h, and a pre-treated solution was obtained after the dropwise addition was completed.

S2. A second part of the emulsified liquid was added to the pre-treated solution to produce a mixed liquid. A mass ratio of the first part of the emulsified liquid to the second part of the emulsified liquid was 1:2). The mixed liquid was stirred for 1 h, then heated to 55°C and maintained at 55°C for 8 h, and then cooled to 25°C to obtain the hollow latex microsphere emulsion. A particle size D50 of the hollow microspheres was 2 µm.

### 2. Preparation of Composite Coating Separator

Step I, an alumina powder with a particle size D50 of 0.8 µm was mixed with water to produce a first mixture, and the first mixture was stirred at 600 rpm for 40 min. A dispersant (polyethylene glycol) was added to the first mixture to produce a second mixture, and the second mixture was stirred at 600 rpm for 40 min. The hollow latex microsphere emulsion was added to the second mixture to produce a third mixture, and the third mixture was stirred at 200 rpm for 30 min. A thickener (sodium hydroxymethyl cellulose) was added to the third mixture to produce a fourth mixture, and the fourth mixture was stirred at 200 rpm for 60 min. A binder (polyacrylic acid) was added to the fourth mixture to produce a fifth mixture, and the fifth mixture was stirred at 200 rpm for 60 min. Subsequently, iron was filtered out from the fifth mixture to obtain a mixed slurry.

By percentage, raw materials of the mixed slurry included 35% of the alumina powder, 10% of the hollow latex microsphere emulsion, 0.4% of the dispersant, 8% of the thickener, 7% of the binder, and 39.6% of water.

Step II, the mixed slurry was applied to both surfaces of a base film (PE separator) by micro-gravure coating, and then dried to obtain a composite coating separator. A thickness of the base layer in the composite coating separator was 3 µm.

All other operations and parameters remained consistent with Example 1.

### Example 4

A differences between this example and Example 1 was the preparation of the hollow latex microsphere emulsion.

### 1. Preparation of Hollow Latex Microsphere Emulsion

**S1.** Water and an emulsifier (propylene glycol) were mixed at a mass ratio of 1:98 to obtain an emulsified liquid, a first part of the emulsified liquid was taken and stirred at 25°C, and a mixture of a monomer (styrene) and an initiator (azobisisobutyronitrile) was added dropwise at a constant rate when the first part of the emulsified liquid was stirred. A mass ratio of the monomer to the initiator was 100:1. The dropwise addition process lasted for 0.5 h, and a pre-treated solution was obtained after the dropwise addition was completed.

S2. A second part of the emulsified liquid was added to the pre-treated solution to produce a mixed liquid. A mass ratio of the first part of the emulsified liquid to the second part of the emulsified liquid was 1:3). The mixed liquid was stirred for 0.5 h, then heated to 50°C and maintained at 50°C for 6 h, and then cooled to 25°C to obtain the hollow latex microsphere emulsion.

All other operations and parameters remained consistent with Example 1.

### Example 5

A difference between this example and Example 1 was that the monomer used during the preparation of the hollow latex microsphere emulsion was butadiene. All other operations and parameters remained consistent with Example 1.

### Example 6

A difference between this example and Example 1 was the preparation of the composite coating separator.

### 2. Preparation of Composite Coating Separator

Step I, an alumina powder with a particle size D50 of 1 µm was mixed with water to produce a first mixture, and the first mixture was stirred at 300 rpm for 60 min. A dispersant (polyethylene glycol) was added to the first mixture to produce a second mixture, and the second mixture was stirred at 300 rpm for 60 min. The hollow latex microsphere emulsion was added to the second mixture to produce a third mixture, and the third mixture was stirred at 600 rpm for 30 min. A thickener (sodium hydroxymethyl cellulose) was added to the third mixture to produce a fourth mixture, and the fourth mixture was stirred at 600 rpm for 30 min. A binder (polyacrylic acid) was added to the fourth mixture to produce a fifth mixture, and the fifth mixture was stirred at 600 rpm for 30 min. Subsequently, iron was filtered out from the fifth mixture to obtain a mixed slurry.

By percentage, raw materials of the mixed slurry included 30% of the alumina powder, 5% of the hollow latex microsphere emulsion, 0.3% of the dispersant, 5% of the thickener, 5% of the binder, and 54.7% of water.

Step II, the mixed slurry was applied to both surfaces of a PE separator by micro-gravure coating, and then dried to obtain a composite coating separator.

All other operations and parameters remained consistent with Example 1.

### Example 7

A difference between this example and Example 1 was the thickness of the base layer, which is 1 µm. All other operations and parameters remained consistent with Example 1.

### Example 8

A difference between this example and Example 1 was the particle size D50 of the hollow microspheres, which is 0.5 µm. All other operations and parameters remained consistent with Example 1.

### Example 9

A difference between this example and Example 1 was the particle size D50 of the hollow microspheres, which is 4 µm. All other operations and parameters remained consistent with Example 1.

### Example 10

A difference between this example and Example 1 was the particle size D50 of the alumina powder, which is 2 µm. All other operations and parameters remained consistent with Example 1.

### Comparative Example 1

A difference between this example and Example 1 was the coating layer on the surface of the base film (PE separator), which included an alumina coating and an organic coating stacked with each other. The alumina coating was obtained by drying a slurry containing alumina powder. The organic coating was obtained by drying a slurry containing a hollow latex microsphere emulsion.

### 1. Preparation of Slurry

(1) The alumina powder was added to water, and stirred at 500 rpm for 60 minutes, then a (polyethylene glycol) was further added and stirred at 500 rpm for 60 minutes, then a thickener (sodium hydroxymethyl cellulose) was further added and stirred at 300 rpm for 60 minutes, and then a binder (polyacrylic acid) was further added and stirred at 300 rpm for 60 minutes. Subsequently, iron was filtered out to obtain the slurry containing the alumina powder, referred to as an alumina slurry.

By weight percentage, raw materials of included 30% of the alumina powder, 0.3% of the dispersant, 5% of the thickener, 5% of the binder, and 59.7% of water.

(2) The hollow latex microsphere emulsion was added to water, stirred at 500 rpm for 60 minutes, then a dispersant (polyethylene glycol) was further added and stirred at 500 rpm for 60 minutes, then a thickener (sodium hydroxymethyl cellulose) was added and stirred at 300 rpm for 60 minutes, then a binder (polyacrylic acid) was further added and stirred at 300 rpm for 60 minutes. Subsequently, iron was filtered out to obtain a slurry containing the hollow latex microsphere emulsion, referred to as an organic slurry.

By weight percentage, raw materials included 30% of the hollow latex microsphere emulsion, 0.3% of the dispersant, 5% of the thickener, 5% of the binder, and 59.7% of water.

### 2. Preparation of Separator

The slurry containing the hollow latex microsphere emulsion and the alumina slurry were applied to a surface of the base film (PE separator) by micro-gravure coating, and dried to obtain the alumina coating which was inorganic. The organic slurry was sprayed onto a surface of the alumina coating by high-speed rotating spraying, and dried to obtain the composite separator. Then the composite separator was rolled up for use.

All other operations and parameters remained consistent with Example 1.

### Comparative Example 2

A difference between this example and Example 1 was an absence of the hollow latex microsphere emulsion in the mixed slurry. All other operations and parameters remained consistent with Example 1.

### Comparative Example 3

A difference between this example and Example 1 was replacement of the hollow latex microsphere emulsion with an equal weight of solid microsphere emulsion.

### 1. Preparation of Solid Microsphere Emulsion

A monomer (styrene) was mixed with an initiator (azobisisobutyronitrile) to obtain a mixture. The mixture was added dropwise to a three-neck flask at a constant rate. The dropwise addition was completed within 2 h. Subsequently, the mixture in the three-neck flask was stirred uniformly for 2 h, then heated to 50°C, maintained at 50°C for 6 h, and then cooled to 25°C to obtain the solid microsphere emulsion with large solid particles.

All other operations and parameters remained consistent with Example 1.

### Comparative Example 4

Differences between this example and Example 1 were that in the mixed slurry, the mass ratio of the alumina powder was 40%, and the mass ratio of the hollow latex microsphere emulsion was 2%.

All other operations and parameters remained consistent with Example 1.

### Comparative Example 5

Differences between this example and Example 1 were that in the mixed slurry, the mass ratio of the alumina powder was 10%, and the mass ratio of the hollow latex microsphere emulsion was 20%.

All other operations and parameters remain consistent with Example 1.

### Testing Methods

### 1. Bonding Test between Separator and Electrode Sheets

The separators prepared from the above examples and comparative examples were conducted with a bonding test between the separator and the electrode sheets. Specifically, the bonding test between the separator and the electrode sheets was conducted under a pressure of 0.3 MPa, at 80°C for 60 s, using an electronic tensile testing to measure a bonding force between the separator and the electrode sheets.

### 2. Electrolyte Absorption Capacity Test

Separator samples taken from separators prepared in the above-mentioned examples and comparative examples with an area of 100cm² were conducted with an electrolyte absorption capacity test. Specifically, the electrolyte absorption capacity test was performed as follows. Firstly, a weight of a separator sample was measured accurately using a precision density balance, and was recorded as M1. The separator sample was soaked in an electrolyte (including EC, PC, and EMC, which were in a ratio of 30:5:65) for testing at 85°C for 24 h. Subsequently, the separator sample was removed from the electrolyte for testing and wiped off residual electrolyte with a dust-free paper. Then the separator sample was weighed, and an obtained weight was recorded as M2. A liquid absorption rate was calculated as an indicator of the electrolyte absorption of the separator. The liquid absorption rate was calculated as follows: liquid absorption rate (%)=(M2-M1)/M1×100%. In detail, M1 represented an initial weight of the separator sample, and M2 represented a weight of the separator sample after being soaked in the electrolyte for testing.

### 3. Lithium Battery Cycle Performance Test

The lithium batteries prepared from the above examples and comparative examples were conducted with a high-temperature cycle performance test. Specifically, a lithium battery to be tested was placed in a 60°C incubator, and charged and discharged with a current of 1C for cycling. Then a capacity retention rate of the lithium battery was deserved and recorded after 500 cycles.

**Table 1**

| group | bonding force /N.m⁻¹ | liquid absorption rate /% | capacity retention rate /% |
|---|---|---|---|
| Ex. 1 | 13.7 | 81.0 | 95.4 |
| Ex. 2 | 13.6 | 80.5 | 95.2 |
| Ex. 3 | 13.6 | 80.8 | 95.3 |
| Ex. 4 | 12.3 | 78.4 | 93.1 |
| Ex. 5 | 11.8 | 76.4 | 92.5 |
| Ex. 6 | 12 | 78.2 | 93.0 |
| Ex. 7 | 11.5 | 76.2 | 92.3 |
| Ex. 8 | 10.4 | 76.0 | 92.0 |
| Ex. 9 | 11.8 | 76.3 | 92.1 |
| Ex. 10 | 11.6 | 76.2 | 92.2 |
| Comp Ex. 1 | 10.2 | 74.6 | 90.5 |
| Comp Ex. 2 | 8.5 | 60.3 | 85.4 |
| Comp Ex. 3 | 9.5 | 65.3 | 88.4 |
| Comp Ex. 4 | 9.7 | 66.3 | 88.5 |
| Comp Ex. 5 | 11.8 | 74.0 | 91.3 |

Based on Examples 1-3, Comparative Examples 1-3, and Table 1, it can be seen that by selecting the hollow latex microsphere emulsion and alumina powder to prepare the mixed slurry for forming the coating layer on the surface of the base film, firstly, the mixed slurry has a suitable viscosity for spreading on the surface of the base film. Furthermore, the hollow microspheres in the hollow latex microsphere emulsion can be evenly dispersed in the mixed slurry and uniformly embedded in the coating layer, significantly improving bonding stability between the electrode sheets and the separator, enhancing the mechanical strength of the wound core, and preventing electrode sheets wrinkling. Moreover, during a formation process of the coating layer from the mixed slurry, the hollow microspheres can float to the surface of the coating layer and protrude from the surface of the coating layer with help of cavities of the hollow microspheres, which is helpful for forming pores for accommodating the electrolyte between the electrode sheets and the separator, which can not only improve wettability of the electrolyte on the electrode sheets and the separator, but also provide a buffer space for the expansion of the anode sheet during the lithium battery cycling process, thereby enhancing cycling performance of the lithium battery.

In Comparative Example 1, the alumina powder and the hollow microspheres were arranged in different layers to form the coating layer, resulting in poor stability. In Comparative Examples 2-3, either hollow microspheres were not used, or solid microspheres which had a higher density than hollow microspheres were used. In these cases, it is difficult to generate enough pores to hold the electrolyte between the separator and the electrode sheets, which is not conducive to the overall performance of the lithium battery. Compared to Comparative Examples 1-3, in the examples of the present disclosure, the hollow microspheres were partially embedded in the base layer and partially protruded from the surface of the base layer, and the base layer further contained a certain amount of alumina powder, which can significantly improve the bonding force between the electrode sheets and the composite coating separator and form stable pores for holding the electrolyte between the separator and the electrode sheets. Therefore, the coating layer on the base film surface in these examples of the present disclosure has better stability, which helps to improve the cycle performance of the lithium battery.

Based on Example 1, Comparative Examples 4-5, and Table 1, it can be seen that by adjusting the usage proportion of the alumina powder and hollow microspheres, in Example 1, while the mixed slurry with a suitable viscosity was ensured, the number of floating hollow microspheres was maximally achieved as much as possible, increasing the contact area between the hollow microspheres and the electrode sheets, which is helpful for improving stability of the coating layer, the bonding stability between the separator and the electrode sheets, thereby enhancing the bonding force between the separator and the electrode sheets and the liquid absorption performance of the separator.

Based on Examples 1, 4, 6, and Table 1, it can be seen that the hollow latex microsphere emulsion and composite coating separator prepared by the method of the present disclosure show excellent compatibility between the alumina powder and hollow microspheres. While achieving stable bonding between the base layer and the base film and stable bonding between the hollow microspheres and the electrode sheets, embedding stability of the hollow microspheres in the base layer is also improved, which helps to enhance stability of the coating layer and improves the cycle performance of the lithium battery.

Based on Examples 1, 5, and Table 1, it can be seen that by selecting and using appropriate types of monomers in combination, and using defined monomers, large-sized microspheres can be synthesized, enhancing the performance of the separator.

Based on Examples 1, 7-10, and Table 1, it can be seen that by controlling the thickness of the base layer and the particle size D50 of the alumina powder and hollow microspheres within an appropriate range, the alumina powder can be evenly dispersed around the hollow microspheres, creating a good "anchoring" effect on the hollow microspheres and improving the embedding stability in the base layer, which is helpful for enhancing the coating stability and improving the cycle performance of the lithium battery.

## Claims

1. A method for preparing a composite coating separator, comprising:
mixing raw materials comprising an inorganic powder, a hollow latex microsphere emulsion, a binder, and a solvent to obtain a mixed slurry;
applying the mixed slurry to a surface of a base film, and drying the mixed slurry on the surface of the base film to obtain the composite coating separator;
wherein in the mixed slurry, a mass ratio of the inorganic powder is 20%-35%, and a mass ratio of the hollow latex microsphere emulsion is 5%-10%;
wherein a viscosity of the mixed slurry is 100 mPa.s-120 mPa.s;
wherein the hollow latex microsphere emulsion comprises hollow microspheres, and a density of the hollow microspheres is 0.8 g/cm³-0.9 g/cm³.

2. The method for preparing the composite coating separator as claimed in claim 1, wherein the hollow latex microsphere emulsion is prepared by a method comprising:
S1. mixing water and an emulsifier to obtain an emulsified liquid, taking and stirring a first part of the emulsified liquid, and adding a mixture of a monomer and an initiator dropwise to the first part of the emulsified liquid during stirring the first part of the emulsified liquid to obtain a pre-treated solution;
S2. adding a second part of the emulsified liquid to the pre-treated solution to obtain a mixed liquid, stirring the mixed liquid, and performing a heat preservation and a cooling operation on the mixed liquid to obtain the hollow latex microsphere emulsion.

3. The method for preparing the composite coating separator as claimed in claim 2, wherein a mass ratio of water to the emulsifier is (2-4): 98, a mass ratio of the first part of the emulsified liquid to the second part of the emulsified liquid is 1: (1-2), and a mass ratio of the monomer to the initiator is 100: (0.5-1).

4. The method for preparing the composite coating separator as claimed in claim 2, wherein in S1, a temperature during stirring the first part of the emulsified liquid is 25±2°C, and the mixture of the monomer and the initiator are added at a uniform speed for 1.5 h-2 h; in S2, the mixed liquid is stirred for 1 h-2 h, and after being stirred, the mixed liquid is heated to 55°C-60°C and maintained at 55°C-60°C for 6 h-8 h.

5. The method for preparing the composite coating separator as claimed in claim 2, wherein the monomer comprises at least one selected from the group consisting of a copolymer of unsaturated nitrile monomer unit, a copolymer of vinyl monomer unit, a copolymer of allylamine monomer unit, a copolymer of acrylate monomer unit, a copolymer of methacrylate monomer unit, a copolymer of vinyl chloride monomer unit, a modified compound of the copolymer of unsaturated nitrile monomer unit, a modified compound of the copolymer of vinyl monomer unit, a modified compound of the copolymer of allylamine monomer unit, a modified compound of the copolymer of acrylate monomer unit, a modified compound of the copolymer of methacrylate monomer unit, and a modified compound of the copolymer of vinyl chloride monomer unit.

6. The method for preparing the composite coating separator as claimed in claim 1, wherein, by weight percentage, the raw materials further comprise 0.2%-0.4% of a dispersant, 5%-10% of a thickener, and 5%-10% of a binder, with the solvent making up the balance.

7. The method for preparing the composite coating separator as claimed in claim 6, comprising:
step I, mixing the inorganic powder with the solvent to obtain a first mixture, and stirring the first mixture; adding the dispersant to the first mixture to obtain a second mixture, and stirring the second mixture; adding the hollow latex microsphere emulsion to the second mixture to obtain a third mixture, and stirring the third mixture; adding the thickener to the third mixture to obtain a fourth mixture, and stirring the fourth mixture; adding the binder to the fourth mixture to obtain a fifth mixture, and stirring the fifth mixture to obtain the mixed slurry; and
step II, applying the mixed slurry to the surface of the base film by micro-gravure coating, and drying the mixed slurry on the base film to obtain the composite coating separator.

8. The method for preparing the composite coating separator as claimed in claim 7, wherein when the first mixture is stirred, a first stirring speed is 500 rpm-600 rpm, and a first stirring duration is 40 min-60 min; when the second mixture is stirred, a second stirring speed is 500 rpm-600 rpm, and a second stirring duration is 40 min-60 min; when the third mixture is stirred, a third stirring speed is 200 rpm-300 rpm, and a third stirring duration is 30 min-60 min; when the fourth mixture is stirred, a fourth stirring speed is 200 rpm-300 rpm, and a fourth stirring duration is 30 min-60 min; when the fifth mixture is stirred, a fifth stirring speed is 200 rpm-300 rpm, and a fifth stirring duration is 30 min-60 min.

9. A composite coating separator prepared by any one of the methods as claimed in claims 1-8.

10. The composite coating separator as claimed in claim 9, comprising a base film and a coating layer arranged on at least one surface of the base film, wherein the coating layer comprises a base layer and hollow microspheres embedded in the base layer, and a thickness of the base layer is ≥3 µm.

11. The composite coating separator as claimed in claim 10, wherein a particle size D50 of the hollow microspheres is 1 µm-2 µm.

12. The composite coating separator as claimed in claim 10, wherein the base layer further comprises an inorganic powder, and a particle size D50 of the inorganic powder is ≤1 µm.

13. A lithium-ion battery comprising the composite coating separator as claimed in any one of claims 9-12.
